# EUROPEAN PATENT APPLICATION

(11) **EP 4 567 417 A1**
(43) Date of publication of application: **11.06.2025**
(21) Application number: 23850202.5
(22) Date of filing: 11.05.2023
(51) Int. Cl.: G01N 29/04, G01N 29/24, G01N 29/34, G01N 29/36

(54) **PROBE MODULE OF ULTRASOUND TEST DEVICE**

(30) Priority: 03.08.2022 KR 20220096750
(71) Applicant: ViewOn Co., Ltd., Seoul 08507 (KR)
(72) Inventor: YOON, Young Wook, Seongnam-si, Gyeonggi-do 13540 (KR); YOON, Young Yeop, Pyeongtaek-si, Gyeonggi-do 17857 (KR); BYOUN, Ki Jun, Seoul 08236 (KR)
(74) Representative: Lavoix
(86) International application number: PCT/KR2023/006424
(87) International publication number: WO 2024/029691

(57) **Abstract**

The present disclosure relates to a probe module for an ultrasonic inspection apparatus, which includes a lower probe module arranged below a target object, wherein the lower probe module includes: a lower housing; a lower transducer arranged in the lower housing and configured to generate ultrasonic waves toward the target object or receive ultrasonic waves, from below the target object; a lower water jacket with an internal space into which one side of the lower transducer is to be inserted, the internal space being filled with liquid; and a lower liquid injection unit configured to inject the liquid into the internal space of the lower water jacket.

## Description

### Technical Field

The present disclosure relates to a probe module for an ultrasonic inspection apparatus, and more specifically, to a probe module for an ultrasonic inspection apparatus, which includes a lower probe module that is arranged below a target object and configured to generate, from below the target object, ultrasonic waves toward the target object so as to inspect the target object.

### Background Art

Ultrasonic inspection apparatuses are for irradiating a target object with ultrasonic waves through a probe module and receiving reflected or transmitted ultrasonic waves with the probe module to visualize them. Ultrasonic inspection apparatuses are able to detect minute defects, and thus require high resolution.

Ultrasonic inspection methods using ultrasonic inspection apparatuses require a transmission medium for transmitting ultrasonic waves. Liquid is used as an ultrasonic transmission medium to prevent attenuation of ultrasonic waves, and water is generally used as such liquid.

In related-art ultrasonic inspection methods, a reservoir is filled with water, a product is placed in the water, and then a probe module is positioned above a target object. An inspection may be performed while the target object is partially submerged in the water.

However, related-art ultrasonic inspection apparatuses including a probe module to be positioned above a target object has the following issues. In related-art ultrasonic inspection apparatuses, a probe module configured to emit ultrasonic waves and receive reflected signals is arranged only on one side of a target object, for example, above the target object.

In related-art ultrasonic inspection apparatuses, the probe module is arranged above a target object, an inspection is performed from above the target object. However, in cases in which a target object requires inspection of both of upper and lower portions, performing an inspection only from above necessitates inverting and moving the target object to performing scanning of the lower portion after scanning of the upper portion.

As described above, when an inspection is performed by using an ultrasonic inspection apparatus including a probe module positioned only on a target object, there is an issue in that inverting and moving the target object increases the process time. In addition, after scanning an upper portion of the target object, when performing alignment according to the inversion and movement of the target object, there is an issue in that it is infeasible to process pieces of signal processing data obtained by scanning the upper and lower portions of the target object in conjunction with each other due to the occurrence of positional alignment tolerance.

In addition, when bubbles are mixed in water, which is an ultrasonic transmission medium of the ultrasonic inspection apparatus, attenuation of ultrasonic waves may occur due to the bubbles. However, related-art ultrasonic inspection apparatuses have an issue in that they do not include a separate device for removing bubbles from water supplied as a transmission medium.

### Disclosure of Invention

### Technical Problem

The present disclosure is to solve the above-mentioned issues, and more particularly, relates to a probe module for an ultrasonic inspection apparatus, which includes a lower probe module that is arranged below a target object and configured to generate, from below the target object, ultrasonic waves toward the target object so as to inspect the target object.

### Solution to Problem

In order to solve the above-described problem, according to the present disclosure, a probe module for an ultrasonic inspection apparatus for inspecting a target object by using ultrasonic waves includes a lower probe module arranged below the target object, wherein the lower probe module includes: a lower housing; a lower transducer arranged in the lower housing and configured to generate ultrasonic waves toward the target object or receive ultrasonic waves, from below the target object; a lower water jacket with an internal space into which one side of the lower transducer is to be inserted, the internal space being filled with liquid; and a lower liquid injection unit configured to inject the liquid into the internal space of the lower water jacket.

In order to solve the above-described problem, in the probe module for an ultrasonic inspection apparatus of the present disclosure, the lower liquid injection unit may include a lower nozzle that is in communication with the internal space of the lower water jacket, and through which the liquid moves, and a lower bubble discharge hole that is in communication with the lower nozzle.

In order to solve the above-described problem, in the probe module for an ultrasonic inspection apparatus of the present disclosure, the lower bubble discharge hole may include a first bubble discharge hole that is in communication with the lower nozzle and extends upward from the lower nozzle, and a second bubble discharge hole that is in communication with the first bubble discharge hole and extends from one end of the first bubble discharge hole horizontally or at a downward angle.

In order to solve the above-described problem, in the probe module for an ultrasonic inspection apparatus of the present disclosure, the lower nozzle may include a lower mesh filter.

In order to solve the above-described problem, in the probe module for an ultrasonic inspection apparatus of the present disclosure, the lower nozzle may include a lower fine nozzle unit including a plurality of fine pipes.

In order to solve the above-described problem, in the probe module for an ultrasonic inspection apparatus of the present disclosure, a lower buffer space having a diameter greater than or equal to a diameter of the lower fine nozzle unit may be arranged between the lower fine nozzle unit and a point at which the lower nozzle and the internal space of the lower water jacket are in communication with each other.

In order to solve the above-described problem, the probe module for an ultrasonic inspection apparatus of the present disclosure may further include a liquid supply unit connected to the lower liquid injection unit, wherein the liquid supply unit may include a liquid storage tank with a space in which the liquid is to be stored, a liquid injection unit configured to inject the liquid into the liquid storage tank, a liquid discharge unit configured to discharge the liquid from the liquid storage tank, and a bubble discharge hole that extends to outside from an upper portion of the liquid storage tank, and the liquid discharge unit may include a fine nozzle unit including a plurality of fine pipes.

In order to solve the above-described problem, the probe module for an ultrasonic inspection apparatus of the present disclosure may further include an upper probe module arranged above the target object, wherein the upper probe module may include: an upper housing; an upper transducer arranged in the upper housing and configured to generate ultrasonic waves toward the target object or receive ultrasonic waves, from above the target object; an upper water jacket with an internal space into which one side of the upper transducer is to be inserted, the internal space being filled with liquid; and an upper liquid injection unit configured to inject the liquid into the internal space of the upper water jacket.

In order to solve the above-described problem, in the probe module for an ultrasonic inspection apparatus of the present disclosure, the upper liquid injection unit may include an upper nozzle that is in communication with the internal space of the upper water jacket, and through which the liquid moves, and the upper water jacket may include an upper bubble discharge hole that extends upward from the internal space of the upper water jacket.

In order to solve the above-described problem, in the probe module for an ultrasonic inspection apparatus of the present disclosure, the upper liquid injection unit may include an upper nozzle that is in communication with the internal space of the upper water jacket, and through which the liquid moves, and an upper bubble discharge hole that is in communication with the upper nozzle.

In order to solve the above-described problem, in the probe module for an ultrasonic inspection apparatus of the present disclosure, the upper nozzle may include an upper mesh filter.

In order to solve the above-described problem, in the probe module for an ultrasonic inspection apparatus of the present disclosure, the upper nozzle may include an upper fine nozzle unit including a plurality of fine pipes.

In order to solve the above-described problem, in the probe module for an ultrasonic inspection apparatus of the present disclosure, an upper buffer space having a diameter greater than or equal to a diameter of the upper fine nozzle unit may be arranged between the upper fine nozzle unit and a point at which the upper nozzle and the internal space of the upper water jacket are in communication with each other.

In order to solve the above-described problem, the probe module for an ultrasonic inspection apparatus of the present disclosure may further include a liquid supply unit connected to the upper liquid injection unit, wherein the liquid supply unit may include a liquid storage tank with a space in which the liquid is to be stored, a liquid injection unit configured to inject the liquid into the liquid storage tank, a liquid discharge unit configured to discharge the liquid from the liquid storage tank, and a bubble discharge hole that extends to outside from an upper portion of the liquid storage tank, and the liquid discharge unit may include a fine nozzle unit including a plurality of fine pipes.

### Advantageous Effects of Invention

The present disclosure relates to a probe module for an ultrasonic inspection apparatus, which has the advantage of being able to inspect a lower portion of a target object without inverting and moving the target object, by using a lower probe module that is arranged below the target object and generates, from below the target object, ultrasonic waves toward the target object.

In addition, the present disclosure has the advantage of being able to inspect lower and upper portions of a target object without inverting and moving the target object, as the inspection is performed on the lower and upper portions of the target object through the lower probe module and an upper probe module, thereby reducing the process time.

In addition, the present disclosure has the advantage of being able to inspect lower and upper portions of a target object without inverting and moving the target object, as the inspection is performed on the lower and upper portions of the target object through the lower probe module and the upper probe module, thereby processing pieces of signal processing data obtained by scanning the upper and lower portions of the target object in conjunction with each other, without a positional alignment tolerance.

In addition, according to the present disclosure, air bubble discharge holes are formed in the lower probe module and the upper probe module to remove bubbles from water, so as to prevent attenuation of ultrasonic waves due to the bubbles.

### Brief Description of Drawings

FIG. 1 is a diagram illustrating a lower probe module and an upper probe module in a measurement state, according to an embodiment of the present disclosure.
FIG. 2 is a diagram illustrating a lower probe module and an upper probe module in a measurement standby state, according to an embodiment of the present disclosure.
FIG. 3 is a diagram illustrating paths along which water moves in a lower probe module and an upper probe module, according to an embodiment of the present disclosure.
FIG. 4 is a diagram illustrating a lower probe module according to an embodiment of the present disclosure.
FIG. 5 is a diagram illustrating a lower liquid injection unit according to an embodiment of the present disclosure.
FIG. 6 is a diagram illustrating an upper probe module according to an embodiment of the present disclosure.
FIG. 7 is a diagram illustrating an upper liquid injection unit according to an embodiment of the present disclosure.
FIG. 8 is a diagram illustrating a liquid supply unit connected to an upper water jacket and a lower water jacket, according to an embodiment of the present disclosure.

### Mode for the Invention

Hereinafter, various embodiments of the present disclosure will be described with reference to the accompanying drawings. Various embodiments of the present disclosure may be variously modified and may have various embodiments, and particular embodiments are illustrated in the drawings and detailed descriptions related to the embodiments are described. However, this is not intended to limit various embodiments of the present disclosure to particular modes of practice, and it is to be appreciated that all changes, equivalents, and/or substitutes that do not depart from the spirit and technical scope of various embodiments of the present disclosure are encompassed in the present disclosure. With regard to the description of the drawings, similar reference numerals are used to refer to similar elements.

As used in various embodiments of the present disclosure, the expressions "include", "may include", and other conjugates refer to the existence of a corresponding disclosed function, operation, or constituent element, and do not limit one or more additional functions, operations, or constituent elements. In addition, as used in various embodiments of the present disclosure, the terms "include", "have", and other conjugates are intended merely to denote a certain feature, numeral, step, operation, element, component, or a combination thereof, and should not be construed to initially exclude the existence of or a possibility of addition of one or more other features, numerals, steps, operations, elements, components, or combinations thereof.

It should be understood that, when it is described that an element is "connected" to another element, the first element may be directly connected to the second element, and a third element may be "connected" between the first and second elements. On the other hand, it should be understood that, when it is described that a first element is "directly connected" or "directly coupled" to a second element, no further element is present between the first element and the second element.

The terms used in various embodiments of the present disclosure are used only to describe a particular embodiment, and are not intended to limit the various embodiments of the present disclosure. The singular expression also includes the plural meaning as long as it does not inconsistent with the context.

Unless otherwise defined, all terms, including technical and scientific terms, used herein have the same meaning as commonly understood by those of skill in the art to which the present disclosure pertains based on an understanding of the present disclosure.

Terms, such as those defined in commonly used dictionaries, are to be interpreted as having a meaning that is consistent with their meaning in the context of the relevant art and various embodiments of the present disclosure, and are not to be interpreted in an idealized or overly formal sense unless expressly so defined herein.

The present disclosure relates to a probe module for an ultrasonic inspection apparatus, which includes a lower probe module that is arranged below a target object and configured to generate, from below the target object, ultrasonic waves toward the target object so as to inspect the target object. Hereinafter, preferable embodiments of the present disclosure will be described in detail with reference to the accompanying drawings.

A probe module for an ultrasonic inspection apparatus according to an embodiment of the present disclosure is to inspect a target object 10, and may inspect the target object 10 by emitting ultrasonic waves toward the target object 10 and receiving the reflected or transmitted ultrasonic waves at the probe module. The target object 10 may be any one of various products that may be subjected to an ultrasonic inspection.

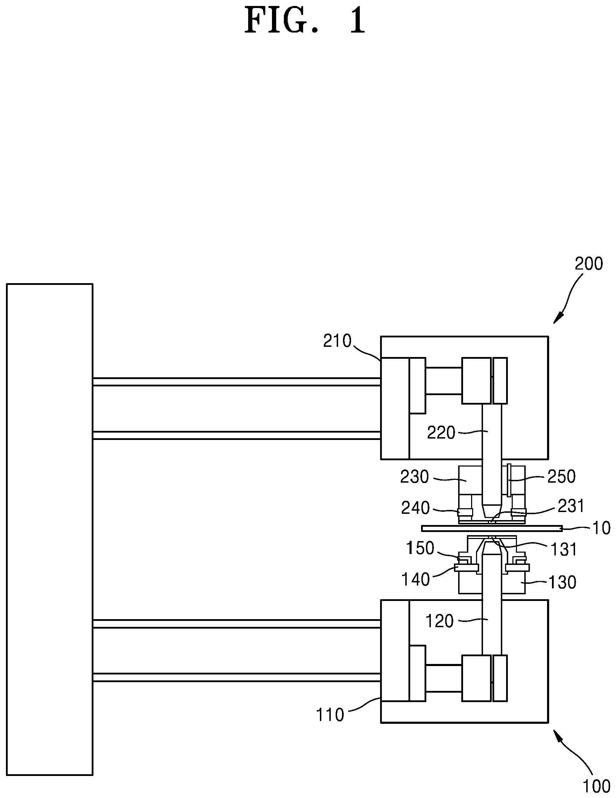

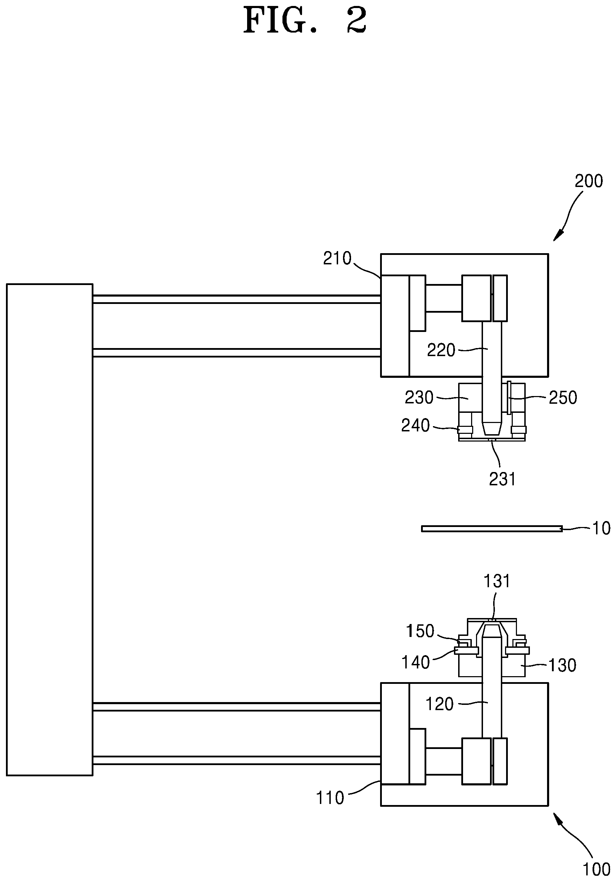

The probe module for an ultrasonic inspection apparatus according to an embodiment of the present disclosure includes a lower probe module 100 arranged below the target object 10. Referring to FIGS. 1 and 2, the lower probe module 100 includes a lower housing 110, a lower transducer 120, a lower water jacket 130, and a lower liquid injection unit 140.

The lower housing 110 may be a housing of the lower probe module 100. The lower housing 110 may be provided above the target object 10, the lower transducer 120 may be provided in the lower housing 110, and the lower housing 110 may be connected to a moving device to move in the x, y, and z directions.

In a measurement state for inspecting the target object 10 as in FIG. 1, the lower housing 110 may move toward the target object 10. In addition, when in a measurement standby state as in FIG. 2, the lower housing 110 may move away from the target object 10.

According to an embodiment of the present disclosure, by moving the lower housing 110, the lower transducer 120 provided in the lower housing 110 may be moved.

The lower transducer 120 may be provided in the lower housing 110 to generate ultrasonic waves toward the target object 10 or receive ultrasonic waves, from below the target object 10. The lower transducer 120 is a device capable of generating ultrasonic waves, and ultrasonic waves may be emitted from below the target object 10 by using the lower transducer 120.

In addition, ultrasonic waves may be received by using the lower transducer 120. In detail, the lower transducer 120, serving as a receiving unit, may receive ultrasonic waves entering the lower transducer 120.

The lower water jacket 130 has an internal space into which one side of the lower transducer 120 may be inserted, and the internal space of the lower water jacket 130 may be filled with liquid.

A transmission medium is required to transmit ultrasonic waves generated by the lower transducer 120 to the target object 10, and the transmission medium may include liquid. The internal space of the lower water jacket 130 may be filled with the transmission medium including liquid, and the transmission medium may be water. Hereinafter, the description will focus on an example in which the transmission medium is water.

One side of the lower transducer 120 may be arranged in the internal space of the lower water jacket 130. The lower water jacket 130 may be provided with a lower discharge unit 131, and the lower discharge unit 131 may be a through hole formed in the direction from the inside of the lower water jacket 130 toward the target object 10.

According to an embodiment of the present disclosure, an inspection may be performed while spraying liquid, which is a transmission medium for ultrasonic transmission, toward a target object through the lower water jacket 130, without immersing the target object in the liquid. In detail, the liquid may be sprayed through the lower discharge unit 131 of the lower water jacket 130, and ultrasonic waves may be transmitted to the target object 10 as the sprayed liquid acts as a transmission medium.

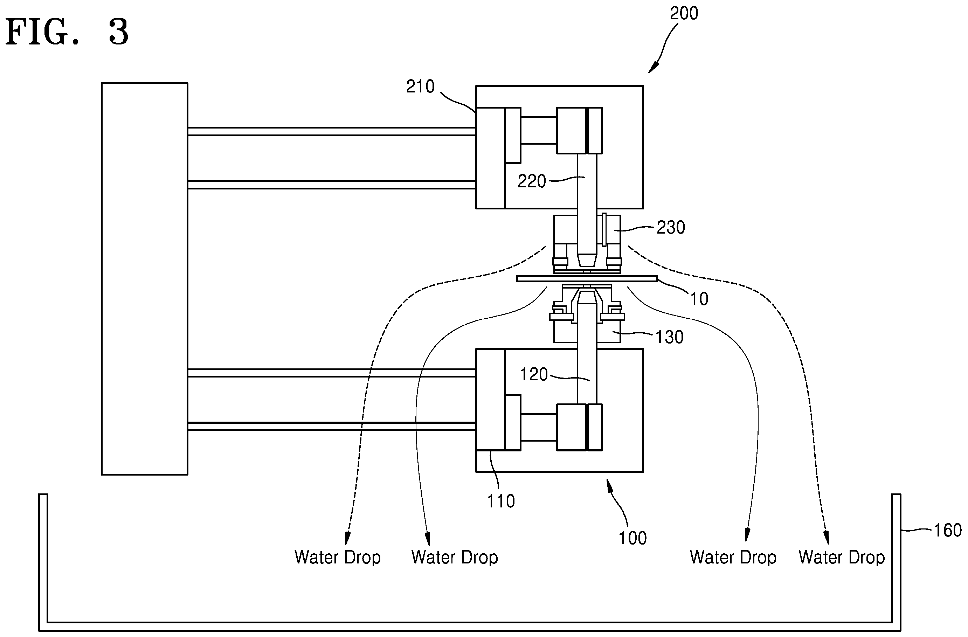

Ultrasonic waves generated by the lower transducer 120 may pass through the lower discharge unit 131 to be emitted toward the target object 10. Referring to FIG. 3, the water filled in the internal space of the lower water jacket 130 is discharged through the lower discharge unit 131 of the lower water jacket 130.

The water may be a transmission medium for transmitting ultrasonic waves, and may be discharged through the lower discharge unit 131, and ultrasonic waves generated by the lower transducer 120 may be emitted toward the target object 10 through the water discharged through the lower discharge unit 131.

The water discharged through the lower discharge unit 131 may be moved to a reservoir 160 provided outside the lower housing 110, and the water moved to the reservoir 160 may be moved to the lower liquid injection unit 140, which will be described below, through a pump or the like.

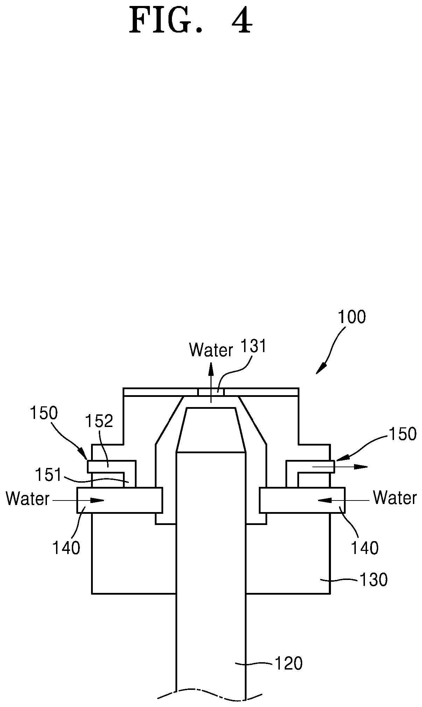

Referring to FIG. 4, the lower liquid injection unit 140 may inject liquid into the internal space of the lower water jacket 130. The lower liquid injection unit 140 may be connected to a hose or the like extending to the outside, and liquid may move to the lower liquid injection unit 140 through the hose.

The liquid that has moved to the lower liquid injection unit 140 passes through the lower liquid injection unit 140 and moves into the internal space of the lower water jacket 130. Here, the liquid injected into the internal space of the lower water jacket 130 through the lower liquid injection unit 140 may be water.

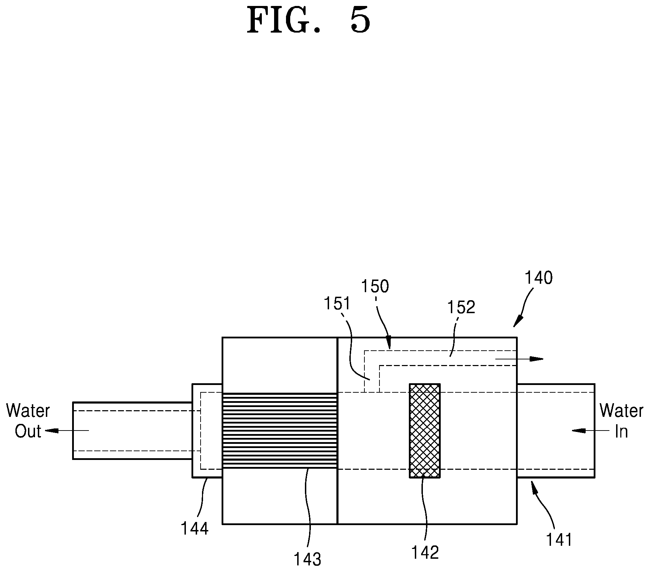

Referring to FIG. 5, the lower liquid injection unit 140 according to an embodiment of the present disclosure includes a lower nozzle 141 and a lower bubble discharge hole 150.

The lower nozzle 141 may be in communication with the internal space of the lower water jacket 130, and may be a nozzle through which liquid moves. The lower nozzle 141 may be a nozzle provided inside the lower liquid injection unit 140, and water may be injected into the lower water jacket 130 through the lower nozzle 141.

The lower bubble discharge hole 150 is in communication with the lower nozzle 141. In detail, the lower bubble discharge hole 150 may be a hollow tube provided above the lower nozzle 141, and one end of the lower bubble discharge hole 150 may be in communication with the lower nozzle 141.

The lower bubble discharge hole 150 is to remove bubbles from water moving through the lower nozzle 141. The water moving through the lower nozzle 141 is a transmission medium that transmits ultrasonic waves generated by the lower transducer 120, and when bubbles form in water stored in the lower nozzle 141, the bubbles may cause attenuation of ultrasonic waves.

The lower bubble discharge hole 150 is to prevent the attenuation and may be provided above the lower nozzle 141, and bubbles may be removed, through the lower bubble discharge hole 150, from water moving through the lower nozzle 141.

In detail, when bubbles form in water, the bubbles move to the top of the water. Water containing bubbles may be discharged through the lower gas discharge hole 150 provided above the lower nozzle 141, and accordingly, bubbles may be removed from water passing through the lower nozzle 141.

Referring to FIGS. 4 and 5, the lower bubble discharge hole 150 includes a first bubble discharge hole 151 and a second bubble discharge hole 152. The first bubble discharge hole 151 is in communication with the lower nozzle 141 and extends upward from the lower nozzle 141, and may extend vertically from an upper portion of the lower nozzle 141.

The second bubble discharge hole 152 is in communication with the first bubble discharge hole 151 and extends from one end of the first bubble discharge hole 151 horizontally or at a downward angle. Referring to FIGS. 3 and 4, water may be discharged from the lower discharge unit 131 of the lower water jacket 130.

Here, in a case in which the lower bubble discharge hole 150 includes only the first bubble discharge hole 151 that extends vertically, there is a risk that water discharged from the lower discharge unit 131 will flow into the lower bubble discharge hole 150. Water flowing into the lower bubble discharge hole 150 makes it difficult to remove, via the lower bubble discharge hole 150, bubbles from water moving through the lower liquid injection unit 140.

To prevent this, the second bubble discharge hole 152 is formed to extend from one end of the first bubble discharge hole 151 horizontally or at a downward angle. As the second bubble discharge hole 152 extends from one end of the first bubble discharge hole 151 horizontally or at a downward angle, it is possible to prevent water discharged from the lower discharge unit 131 from flowing into the lower bubble discharge hole 150.

Referring to FIG. 5, the lower nozzle 141 may include a lower mesh filter 142. The lower mesh filter 142 may filter out foreign substances contained in water moving through the lower nozzle 141.

Referring to FIG. 5, the lower nozzle 141 includes a lower fine nozzle unit 143 including a plurality of fine pipes. The lower fine nozzle unit 143 includes a plurality of fine pipes, and water moving through the lower nozzle 141 passes through the lower fine nozzle unit 143.

Here, the plurality of fine pipes provided in the lower fine nozzle unit 143 may extend in the same direction and may extend in a direction parallel to the direction in which the lower nozzle 141 extends.

The lower fine nozzle unit 143 is to form a laminar flow. When water moving through the lower nozzle 141 passes through the lower fine nozzle unit 143, the water moves through the lower fine nozzle unit 143 while forming a laminar flow.

The water flowing into the internal space of the lower water jacket 130 through the lower nozzle 141 may act as a transmission medium that transmits ultrasonic waves generated by the lower transducer 120.

When turbulent flow occurs in the water flowing into the internal space of the lower water jacket 130 through the lower nozzle 141, it may be difficult for the lower transducer 120 to accurately emit ultrasonic waves to a designated position on the target object 10.

The lower fine nozzle unit 143 is to prevent this. Water moving in the lower nozzle 141 through the lower fine nozzle unit 143 may move while forming a laminar flow, and accordingly, ultrasonic waves generated by the lower transducer 120 may be accurately emitted to a designated position on the target object 10.

Referring to FIG. 5, a lower buffer space 144 having a diameter greater than or equal to the diameter of the lower fine nozzle unit 143 may be provided between the lower fine nozzle unit 143 and a point at which the lower nozzle 141 and the internal space of the lower water jacket 130 are in communication with each other.

In detail, water flowing into the lower nozzle 141 passes through the lower fine nozzle unit 143 including the plurality of fine pipes, then passes through the lower buffer space 144 having no fine pipes, and then flows into the lower water jacket 130.

The lower buffer space 144 may be a space for preventing the mixing of separate streams of water that are forming a laminar flow. When water that has passed through the lower fine nozzle unit 143 flows directly into the lower water jacket 130, streams of water forming a laminar flow may be mixed with each other as the space for water movement expands.

In addition, in a case in which the diameter of the point at which the lower nozzle 141 and the internal space of the lower water jacket 130 are in communication with each other is less than the diameter of the lower fine nozzle unit 143, there is a risk that some of streams of water forming a laminar flow will hit a wall.

The lower buffer space 144 is to prevent this. The water that has passed through the lower fine nozzle unit 143 including the plurality of fine pipes passes through the lower buffer space 144 that has no fine pipes, and then flows into the lower water jacket 130, thereby forming a laminar flow such that streams of water are prevented from mixing with each other.

It has been described above that the lower mesh filter 142, the lower fine nozzle unit 143, and the lower buffer space 144 are provided in the lower bubble discharge hole 150 and the lower liquid injection unit 140 of the lower water jacket 130, but the lower bubble discharge hole 150, the lower mesh filter 142, the lower fine nozzle unit 143, and the lower buffer space 144 may not be provided, if necessary.

The probe module for an ultrasonic inspection apparatus according to an embodiment of the present disclosure may further include an upper probe module 200 arranged above the target object 10. That is, the probe module for an ultrasonic inspection apparatus according to an embodiment of the present disclosure may perform an inspection simultaneously from above and below the target object 10 through the lower probe module 100 provided below the target object 10 and the upper probe module 200 provided above the target object 10.

Referring to FIGS. 1 and 2, the upper probe module 200 includes an upper housing 210, an upper transducer 220, an upper water jacket 230, and an upper liquid injection unit 240.

The upper housing 210 may be a housing of the upper probe module 200. The upper housing 210 may be provided above the target object 10, the upper transducer 220 may be provided in the upper housing 210, and the upper housing 210 may be connected to a moving device to move in the x, y, and z directions.

In the measurement state for inspecting the target object 10 as in FIG. 1, the upper housing 210 may move toward the target object 10. In addition, when in the measurement standby state as in FIG. 2, the upper housing 210 may move away from the target object 10.

According to an embodiment of the present disclosure, by moving the upper housing 210, the upper transducer 220 provided in the upper housing 210 may be moved.

The upper transducer 220 may be provided in the upper housing 210 to generate ultrasonic waves toward the target object 10 or receive ultrasonic waves, from above the target object 10. The upper transducer 220 may generate ultrasonic waves or receive ultrasonic waves. The upper transducer 220 is a device capable of generating ultrasonic waves, and ultrasonic waves may be emitted from above the target object 10 by using the upper transducer 220.

In addition, ultrasonic waves may be received by using the upper transducer 220. In detail, the upper transducer 220, serving as a receiving unit, may receive ultrasonic waves entering the upper transducer 220.

The upper water jacket 230 has an internal space into which one side of the upper transducer 220 may be inserted, and the internal space of the upper water jacket 230 may be filled with liquid.

A transmission medium is required to transmit ultrasonic waves generated by the upper transducer 220 to the target object 10, and the transmission medium may include liquid. The internal space of the upper water jacket 230 may be filled with the transmission medium including liquid, and the transmission medium may be water. Hereinafter, the description will focus on an example in which the transmission medium is water.

One side of the upper transducer 220 may be arranged in the internal space of the upper water jacket 230. The upper water jacket 230 may be provided with an upper discharge unit 231, and the upper discharge unit 231 may be a through hole formed in the direction from the inside of the upper water jacket 230 toward the target object 10.

According to an embodiment of the present disclosure, an inspection may be performed while spraying liquid, which is a transmission medium for ultrasonic transmission, toward a target object through the upper water jacket 230, without immersing the target object in the liquid. In detail, the liquid may be sprayed through the upper discharge unit 231 of the upper water jacket 230, and ultrasonic waves may be transmitted to the target object 10 as the sprayed liquid acts as a transmission medium.

Ultrasonic waves generated by the upper transducer 220 may pass through the upper discharge unit 231 to be emitted toward the target object 10. Referring to FIG. 3, the water filled in the internal space of the upper water jacket 230 is discharged through the upper discharge unit 231 of the upper water jacket 230.

The water may be a transmission medium for transmitting ultrasonic waves, and may be discharged through the upper discharge unit 231, and ultrasonic waves generated by the upper transducer 220 may be emitted toward the target object 10 through the water discharged through the upper discharge unit 231.

The water discharged through the upper discharge unit 231 may be moved to the reservoir 160 provided outside the upper housing 210, and the water moved to the reservoir 160 may be moved to the upper liquid injection unit 240, which will be described below, through a pump or the like.

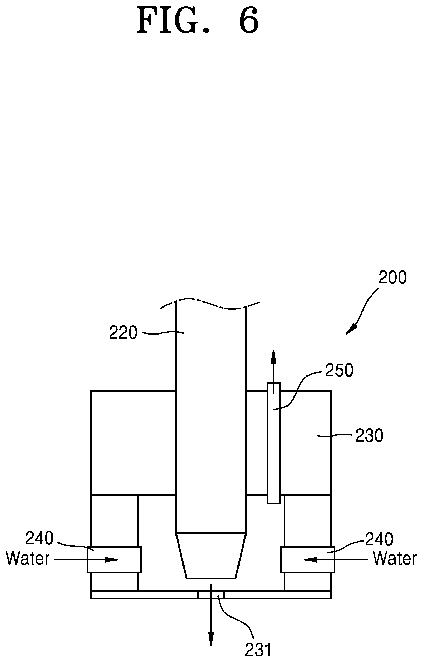

Referring to FIG. 6, the upper liquid injection unit 240 may inject liquid into the internal space of the upper water jacket 230. The upper liquid injection unit 240 may be connected to a hose or the like extending to the outside, and liquid may move to the upper liquid injection unit 240 through the hose.

The liquid that has moved to the upper liquid injection unit 240 passes through the upper liquid injection unit 240 and moves into the internal space of the upper water jacket 230. Here, the liquid injected into the internal space of the upper water jacket 230 through the upper liquid injection unit 240 may be water.

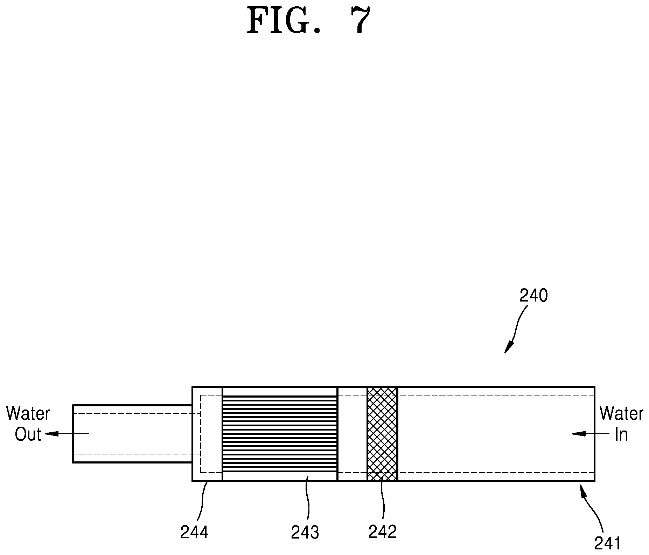

Referring to FIG. 7, the upper liquid injection unit 240 according to an embodiment of the present disclosure includes an upper nozzle 241 and an upper bubble discharge hole 250.

The upper nozzle 241 may be in communication with the internal space of the upper water jacket 230, and may be a nozzle through which liquid moves. The upper nozzle 241 may be a nozzle provided inside the upper liquid injection unit 240, and water may be injected into the upper water jacket 230 through the upper nozzle 241.

The upper bubble discharge hole 250 is provided in the upper water jacket 230, and extends from the internal space of the upper water jacket 230.

In detail, the upper bubble discharge hole 250 may be a hollow tube provided in an upper portion of the upper water jacket 230, and one end of the upper bubble discharge hole 250 may be in communication with the upper water jacket 230.

The upper bubble discharge hole 250 is to remove bubbles from water stored in the internal space of the upper water jacket 230. The water stored in the upper water jacket 230 is a transmission medium that transmits ultrasonic waves generated by the upper transducer 220, when bubbles form in the water stored in the upper water jacket 230, the bubbles may cause attenuation of ultrasonic waves.

The upper bubble discharge hole 250 is to prevent this, and bubbles in the water stored in the upper water jacket 230 may be removed through the upper bubble discharge hole 250.

In detail, when bubbles form in water, the bubbles move to the top of the water. Water containing bubbles may be discharged through the upper gas discharge hole 250 provided above the upper nozzle 241, and accordingly, bubbles may be removed from water passing through the upper nozzle 241.

The upper bubble discharge hole 250 may be provided in an upper portion of the upper water jacket 230, and water containing bubbles may be removed from water stored in the internal space of the upper water jacket 230 through the upper bubble discharge hole 250. The upper bubble discharge hole 250 may extend vertically from an upper portion of the upper water jacket 230.

In addition, the upper bubble discharge hole 250 may be in communication with the upper nozzle 241. In detail, the upper bubble discharge hole 250 may be a hollow tube provided above the upper nozzle 241, and one end of the upper bubble discharge hole 250 may be in communication with the upper nozzle 241.

The upper bubble discharge hole 250 is to remove bubbles from water moving through the upper nozzle 241. The upper bubble discharge hole 250 may be provided above the upper nozzle 241, and water containing bubbles may be removed, through the upper bubble discharge hole 250, from water moving through the upper nozzle 241. The upper bubble discharge hole 250 may extend vertically from the upper nozzle 241 to be in communication with the outside.

Referring to FIG. 7, the upper nozzle 241 may include an upper mesh filter 242. The upper mesh filter 242 may filter out foreign substances contained in water moving through the upper nozzle 241.

Referring to FIG. 7, the upper nozzle 241 includes an upper fine nozzle unit 243 including a plurality of fine pipes. The upper fine nozzle unit 243 includes a plurality of fine pipes, and water moving through the upper nozzle 241 passes through the upper fine nozzle unit 243.

Here, the plurality of fine pipes provided in the upper fine nozzle unit 243 may extend in the same direction and may extend in a direction parallel to the direction in which the upper nozzle 241 extends.

The upper fine nozzle unit 243 is to form a laminar flow. When water moving through the upper nozzle 241 passes through the upper fine nozzle unit 243, the water moves through the upper fine nozzle unit 243 while forming a laminar flow.

The water flowing into the internal space of the upper water jacket 230 through the upper nozzle 241 may be a transmission medium that transmits ultrasonic waves generated by the upper transducer 220.

When turbulent flow occurs in the water flowing into the internal space of the upper water jacket 230 through the upper nozzle 241, it may be difficult for the upper transducer 220 to accurately emit ultrasonic waves to a designated position on the target object 10.

The upper fine nozzle unit 243 is to prevent this. Water moving in the upper nozzle 241 through the upper fine nozzle unit 243 may move while forming a laminar flow, and accordingly, ultrasonic waves generated by the upper transducer 220 may be accurately emitted to a designated position on the target object 10.

Referring to FIG. 7, an upper buffer space 244 having a diameter greater than or equal to the diameter of the upper fine nozzle unit 243 may be provided between the upper fine nozzle unit 243 and a point at which the upper nozzle 241 and the internal space of the upper water jacket 230 are in communication with each other.

In detail, water flowing into the upper nozzle 241 passes through the upper fine nozzle unit 243 including the plurality of fine pipes, then passes through the upper buffer space 244 having no fine pipes, and then flows into the upper water jacket 230.

The upper buffer space 244 may be a space for preventing the mixing of separate streams of water that are forming a laminar flow. When water that has passed through the upper fine nozzle unit 243 flows directly into the upper water jacket 230, streams of water forming a laminar flow may be mixed with each other as the space for water movement expands.

In addition, in a case in which the diameter of the point at which the upper nozzle 241 and the internal space of the upper water jacket 230 are in communication with each other is less than the diameter of the upper fine nozzle unit 243, there is a risk that some of streams of water forming a laminar flow will hit a wall.

The upper buffer space 244 is to prevent this. The water that has passed through the upper fine nozzle unit 243 including the plurality of fine pipes passes through the upper buffer space 244 that has no fine pipes, and then flows into the upper water jacket 230, thereby forming a laminar flow such that streams of water are prevented from mixing with each other.

It has been described above that the upper mesh filter 242, the upper fine nozzle unit 243, and the upper buffer space 244 are provided in the upper bubble discharge hole 250 and the upper liquid injection unit 240 of the upper water jacket 230, but the upper bubble discharge hole 250, the upper mesh filter 242, the upper fine nozzle unit 243, and the upper buffer space 244 may not be provided, if necessary.

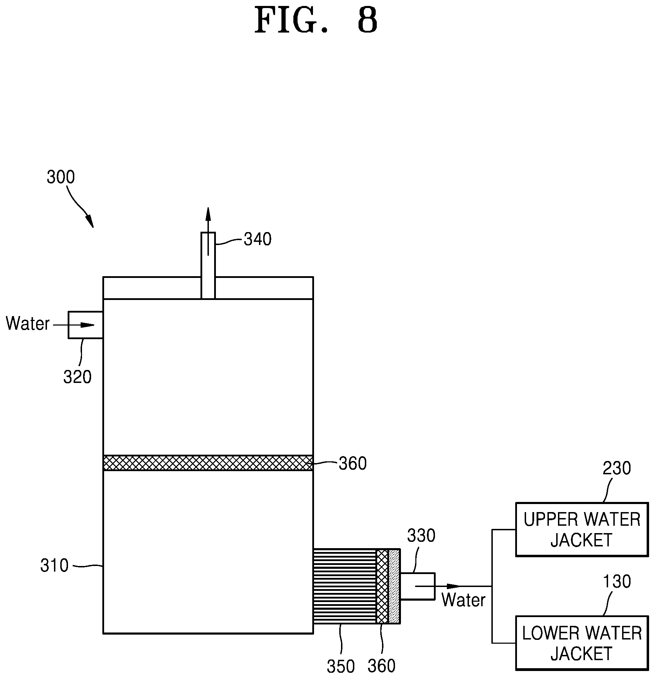

Referring to FIG. 8, the probe module for an ultrasonic inspection apparatus according to an embodiment of the present disclosure further includes a liquid supply unit 300.

The liquid supply unit 300 may be connected to the lower liquid injection unit 140 or the upper liquid injection unit 240, and may supply liquid to the lower liquid injection unit 140 or the upper liquid injection unit 240.

The liquid supply unit 300 may be provided the outside of the lower housing 110 and the upper housing 210, and may be connected to the lower liquid injection unit 140 or the upper liquid injection unit 240 through a hose or the like.

The liquid supply unit 300 according to an embodiment of the present disclosure includes a liquid storage tank 310, a liquid injection unit 320, a liquid discharge unit 330, and a bubble discharge hole 340.

Referring to FIG. 8, the liquid storage tank 310 has formed therein a space in which liquid may be stored. The liquid injection unit 320 may inject liquid into the liquid storage tank 310, and the liquid may be stored in the liquid storage tank 310 through the liquid injection unit 320.

The liquid discharge unit 330 discharges the liquid from the liquid storage tank 310. The liquid stored in the liquid storage tank 310 may be discharged through the liquid discharge unit 330, and the liquid discharged through the liquid discharge unit 330 may be supplied to the lower liquid injection unit 140 or the upper liquid injection unit 240.

The liquid discharge unit 330 may include a fine nozzle unit 350 including a plurality of fine pipes. Referring to FIG. 8, the fine nozzle unit 350 includes a plurality of fine pipes, and liquid moving through the liquid discharge unit 330 passes through the fine nozzle unit 350.

Here, the plurality of fine pipes provided in the fine nozzle unit 350 may extend in the same direction and may extend in a direction parallel to the direction in which the liquid discharge unit 330 extends.

The fine nozzle unit 350 is to form a laminar flow. When water passes through the fine nozzle unit 350 through the liquid discharge unit 330, the water moves through the fine nozzle unit 350 while forming a laminar flow.

However, if necessary, the mesh filters 360 may not be provided in the liquid storage tank 310 and the liquid discharge unit 330, or the mesh filter 360 may be installed in the liquid injection unit 320.

According to an embodiment of the present disclosure, the liquid stored in the liquid storage tank 310 may be water. The bubble discharge hole 340 extends upward from the liquid storage tank 310. In detail, the bubble discharge hole 340 may be a hollow tube provided in an upper portion of the liquid storage tank 310, and one end of the bubble discharge hole 340 may be in communication with the liquid storage tank 310.

The bubble discharge hole 340 is to remove bubbles from water stored in the internal space of the liquid storage tank 310. The water stored in the liquid storage tank 310 is a transmission medium that transmits ultrasonic waves generated by the lower transducer 120 or the upper transducer 220, when bubbles form in the water stored in the liquid storage tank 310, the bubbles may cause attenuation of ultrasonic waves.

The bubble discharge hole 340 is to prevent this, and may remove bubbles from the water before the water is supplied to the lower liquid injection unit 140 or the upper liquid injection unit 240.

In detail, when bubbles form in water, the bubbles move to the top of the water. Water containing bubbles may be discharged through the bubble discharge hole 340 provided in the upper portion of the liquid storage tank 310, and accordingly, the bubbles are removed before the water is supplied to the lower liquid injection unit 140 or the upper liquid injection unit 240.

The bubble discharge hole 340 may be provided in an upper portion of the liquid storage tank 310, and bubbles may be removed from water stored in the internal space of the liquid storage tank 310 through the bubble discharge hole 340. The bubble discharge hole 340 may extend vertically from the upper portion of the liquid storage tank 310.

Referring to FIG. 8, the liquid storage tank 310 and the liquid discharge unit 330 may include the mesh filters 360. The mesh filters 360 may filter out foreign substances contained in the water stored in the liquid storage tank 310, and in water moving through the liquid discharge unit 330.

The probe module for an ultrasonic inspection apparatus according to an embodiment of the present disclosure described above has the following effects.

The probe module for an ultrasonic inspection apparatus according to an embodiment of the present disclosure may inspect a lower portion of a target object without inverting and moving the target object, by using the lower probe module that is arranged below the target object and generates, from below the target object, ultrasonic waves toward the target object.

Furthermore, the probe module for an ultrasonic inspection apparatus according to an embodiment of the present disclosure may inspect lower and upper portions of a target object without inverting and moving the target object, as the inspection is performed from below and above the target object through the lower probe module and the upper probe module, thereby reducing the process time.

In addition, the probe module for an ultrasonic inspection apparatus according to an embodiment of the present disclosure may inspect lower and upper portions of a target object without inverting and moving the target object, as the inspection is performed from below and above the target object through the lower probe module and the upper probe module, thereby processing pieces of signal processing data obtained by scanning the upper and lower portions of the target object in conjunction with each other, without a positional alignment tolerance.

In addition, in the probe module for an ultrasonic inspection apparatus according to an embodiment of the present disclosure, air bubble discharge holes are formed in the lower probe module and the upper probe module to remove bubbles from water, so as to prevent attenuation of ultrasonic waves due to the bubbles.

The present disclosure is described above in detail with reference to preferred embodiments, but the present disclosure is not limited to the above embodiments, and various modifications may be made without departing from the scope of the present disclosure. Accordingly, the true technical protection scope of the present disclosure should be defined by the technical spirit of the appended claims.

## Claims

1. A probe module for an ultrasonic inspection apparatus for inspecting a target object by using ultrasonic waves, the probe module comprising a lower probe module arranged below the target object,
wherein the lower probe module comprises:
a lower housing;
a lower transducer arranged in the lower housing and configured to generate ultrasonic waves toward the target object or receive ultrasonic waves, from below the target object;
a lower water jacket with an internal space into which one side of the lower transducer is to be inserted, the internal space being filled with liquid; and
a lower liquid injection unit configured to inject the liquid into the internal space of the lower water jacket.

2. The probe module of claim 1, wherein the lower liquid injection unit comprises a lower nozzle that is in communication with the internal space of the lower water jacket, and through which the liquid moves, and a lower bubble discharge hole that is in communication with the lower nozzle.

3. The probe module of claim 2, wherein the lower bubble discharge hole comprises a first bubble discharge hole that is in communication with the lower nozzle and extends upward from the lower nozzle, and a second bubble discharge hole that is in communication with the first bubble discharge hole and extends from one end of the first bubble discharge hole horizontally or at a downward angle.

4. The probe module of claim 2, wherein the lower nozzle comprises a lower mesh filter.

5. The probe module of claim 2, wherein the lower nozzle comprises a lower fine nozzle unit comprising a plurality of fine pipes.

6. The probe module of claim 5, wherein a lower buffer space having a diameter greater than or equal to a diameter of the lower fine nozzle unit is arranged between the lower fine nozzle unit and a point at which the lower nozzle and the internal space of the lower water jacket are in communication with each other.

7. The probe module of claim 1, further comprising a liquid supply unit connected to the lower liquid injection unit,
wherein the liquid supply unit comprises a liquid storage tank with a space in which the liquid is to be stored, a liquid injection unit configured to inject the liquid into the liquid storage tank, a liquid discharge unit configured to discharge the liquid from the liquid storage tank, and a bubble discharge hole that extends to outside from an upper portion of the liquid storage tank, and
the liquid discharge unit comprises a fine nozzle unit comprising a plurality of fine pipes.

8. The probe module of claim 1, further comprising an upper probe module arranged above the target object,
wherein the upper probe module comprises:
an upper housing;
an upper transducer arranged in the upper housing and configured to generate ultrasonic waves toward the target object or receive ultrasonic waves, from above the target object;
an upper water jacket with an internal space into which one side of the upper transducer is to be inserted, the internal space being filled with liquid; and
an upper liquid injection unit configured to inject the liquid into the internal space of the upper water jacket.

9. The probe module of claim 8, wherein the upper liquid injection unit comprises an upper nozzle that is in communication with the internal space of the upper water jacket, and through which the liquid moves, and the upper water jacket comprises an upper bubble discharge hole that extends upward from the internal space of the upper water jacket.

10. The probe module of claim 8, wherein the upper liquid injection unit comprises an upper nozzle that is in communication with the internal space of the upper water jacket, and through which the liquid moves, and an upper bubble discharge hole that is in communication with the upper nozzle.

11. The probe module of claim 9, wherein the upper nozzle comprises a mesh filter.

12. The probe module of claim 9, wherein the upper nozzle comprises an upper fine nozzle unit comprising a plurality of fine pipes.

13. The probe module of claim 12, wherein an upper buffer space having a diameter greater than or equal to a diameter of the upper fine nozzle unit is arranged between the upper fine nozzle unit and a point at which the upper nozzle and the internal space of the upper water jacket are in communication with each other.

14. The probe module of claim 8, further comprising a liquid supply unit connected to the upper liquid injection unit,
wherein the liquid supply unit comprises a liquid storage tank with a space in which the liquid is to be stored, a liquid injection unit configured to inject the liquid into the liquid storage tank, a liquid discharge unit configured to discharge the liquid from the liquid storage tank, and a bubble discharge hole that extends to outside from an upper portion of the liquid storage tank, and
the liquid discharge unit comprises a fine nozzle unit comprising a plurality of fine pipes.
